# FASCICULE DE BREVET EUROPEEN

(11) **EP 2 534 389 B1**
(45) Date de publication et mention de la délivrance du brevet: **09.04.2014**
(21) Numéro de dépôt: 11708060.6
(22) Date de dépôt: 02.02.2011
(51) Int. Cl.: F16D 43/10

(54) **DISPOSITIF D'ACCOUPLEMENT ENTRE UN ARBRE ET UNE POULIE ET BLOC MOTEUR POUVANT EQUIPER UN VEHICULE AUTOMOBILE**
KUPPLUNGSVORRICHTUNG ZWISCHEN EINE WELLE, EINE LAUFROLLE UND EINEN MOTORBLOCK, INTEGRIERBAR IN EINEM FAHRZEUG
CLUTCH SYSTEM BETWEEN A SHAFT, A POULEY AND A MOTOR BLOCK FOR A CAR

(30) Priorité: 09.02.2010 FR 1050888
(43) Date de publication de la demande: 19.12.2012
(73) Titulaire: PSA Peugeot Citroen Automobiles S.A., 78140 Velizy Villacoublay (FR)
(72) Inventeur: WASCHEUL, Michael, F-78260 Acheres (FR); GIANNONI, Marc, F-75009 Paris (FR); LE LIEVRE, Armel, F-78360 Montesson (FR); BERGER, Julien, F-75005 Paris (FR)
(74) Mandataire: Laurin, Ghislain Nicolas
(86) Numéro de dépôt international: PCT/FR2011/050210
(87) Numéro de publication internationale: WO 2011/098710

(56) Documents cités:
- EP-A2- 1 847 412
- DE-C- 150 105
- FR-A- 663 919
- FR-A- 1 164 423
- FR-A- 1 265 728
- FR-A1- 2 462 048
- US-A- 2 107 341

## Description

La présente invention revendique la priorité de la demande française 1050888 déposée le 09 Février 2010 dont le contenu (texte, dessins et revendications) est ici incorporé par référence.

L'invention concerne un dispositif d'accouplement entre un arbre et une poulie ainsi qu'un bloc moteur pouvant équiper un véhicule automobile et comprenant le dispositif d'accouplement.

Les véhicules automobiles comprennent généralement plusieurs accessoires nécessitant un apport énergétique pour leur fonctionnement. L'énergie peut être apportée par le réseau électrique du véhicule ou directement par la motorisation du véhicule en amont de la boite de vitesse. A titre d'exemple, le moteur thermique du véhicule peut entrainer un groupe de climatisation par l'intermédiaire d'une courroie souvent appelée courroie d'accessoires. Le groupe de climatisation comprend généralement un compresseur à piston entrainé par la rotation d'un arbre. L'apport d'énergie mécanique du moteur thermique à l'arbre du groupe de climatisation permet d'éviter l'utilisation d'un moteur électrique dédié à l'entrainement du groupe de climatisation.

Par ailleurs, la courroie d'accessoire associée au moteur thermique entraine généralement une machine électrique utilisée comme alternateur permettant la fourniture d'énergie au réseau électrique du véhicule. Cette machine électrique peut être réversible et, dans ce cas, elle est utilisée pour démarrer le moteur thermique. Cette machine est alors appelée alternateur réversible.

On cherche de plus en plus à limiter la consommation de carburant fossile dans les véhicules automobiles. A cet effet, on développé des véhicules hybrides mettant en oeuvre une double motorisation, comme par exemple un moteur thermique et un moteur électrique alimenté par des batteries équipant le véhicule. Le moteur électrique est utilisé tant que la charge des batteries le permet. Cette double motorisation pose un problème pour l'apport énergétique aux accessoires tel que le groupe de climatisation lorsque ceux-ci sont entrainés par la courroie d'accessoires. En effet, l'entrainement par courroie ne peut se faire que si le moteur thermique est en fonctionnement. Le groupe de climatisation se trouve donc à l'arrêt lorsque le véhicule hybride est propulsé par son moteur électrique.

L'invention vise à pallier ce problème en débrayant le moteur thermique de la courroie d'accessoire et en utilisant l'alternateur réversible pour faire tourner un accessoire, tel que le groupe de climatisation, lorsque le moteur thermique est à l'arrêt.

On connait par ailleurs du document FR1164423 un dispositif d'accouplement correspondant au préambule de la revendication 1.

A cet effet, l'invention a pour objet un dispositif d'accouplement entre un arbre et une poulie pouvant tourner l'un par rapport à l'autre autour d'un axe, la poulie étant située autour de l'arbre. le dispositif d'accouplement comprend des moyens débrayables autonomes d'entrainement de l'arbre par la poulie permettant d'interdire l'entrainement de l'arbre par la poulie lorsque celle-ci tourne à une vitesse de rotation inférieure à une vitesse de rotation donnée et permettant l'entrainement de l'arbre par la poulie lorsque celle-ci tourne à une vitesse de rotation supérieure à la vitesse de rotation donnée, les moyens débrayables autonomes d'entrainement comprennent un embrayage permettant l'accouplement de l'arbre par rapport à la poulie sous l'effet d'un effort d'accouplement et au moins une masse inertielle pouvant se déplacer radialement par rapport à l'axe lors de la rotation de la poulie. Le déplacement de la masse inertielle génère l'effort d'accouplement, l'effort d'accouplement étant axial.

Selon l'invention, l'effort d'accouplement est transmis de la masse inertielle vers l'embrayage au moyen d'un plateau conique sur lequel la masse inertielle prend appui lors de son déplacement radial, sur une surface conique appartenant à la dite masse inertielle. Les termes radial et axial s'entendent par rapport à l'axe de rotation de la poulie.

Le dispositif peut comprendre un ressort de rappel s'opposant à l'effort d'accouplement et maintenant l'embrayage désaccouplé lorsque la vitesse de rotation de la poulie est inférieure à la vitesse de rotation donnée.

Selon un mode de réalisation particulier, l'embrayage est conique. Cette disposition permet de transmettre un couple important dans un faible volume.

Afin d'augmenter encore le couple transmis par l'embrayage, il comprend plusieurs cônes de friction répartis en deux ensembles alternés, un premier ensemble étant lié en rotation à la poulie et un second ensemble étant lié en rotation à l'arbre.

L'invention a également pour objet un bloc moteur pouvant équiper un véhicule automobile et comprenant un moteur thermique, un alternateur réversible permettant le démarrage du moteur thermique et la génération d'énergie électrique, un accessoire, comme par exemple un groupe de climatisation, le moteur thermique et l'alternateur réversible pouvant entrainer l'accessoire en rotation au moyen d'une courroie. Le bloc moteur comprend un dispositif d'accouplement selon l'invention entre un arbre de sortie du moteur thermique et une poulie entrainée par la courroie.

L'invention sera mieux comprise et d'autres avantages apparaîtront à la lecture de la description détaillée d'un mode de réalisation donné à titre d'exemple, description illustrée par le dessin joint dans lequel :
- la figure 1 représente la courroie d'accessoire d'un véhicule automobile et plusieurs éléments reliés par cette courroie ;
- la figure 2 représente une vue schématique en coupe d'un dispositif d'accouplement débrayable entre une poulie entrainée par la courroie d'accessoire et un arbre ;
- la figure 3 représente en perspective et en vue éclatée, le dispositif d'accouplement débrayable de la figure 2.

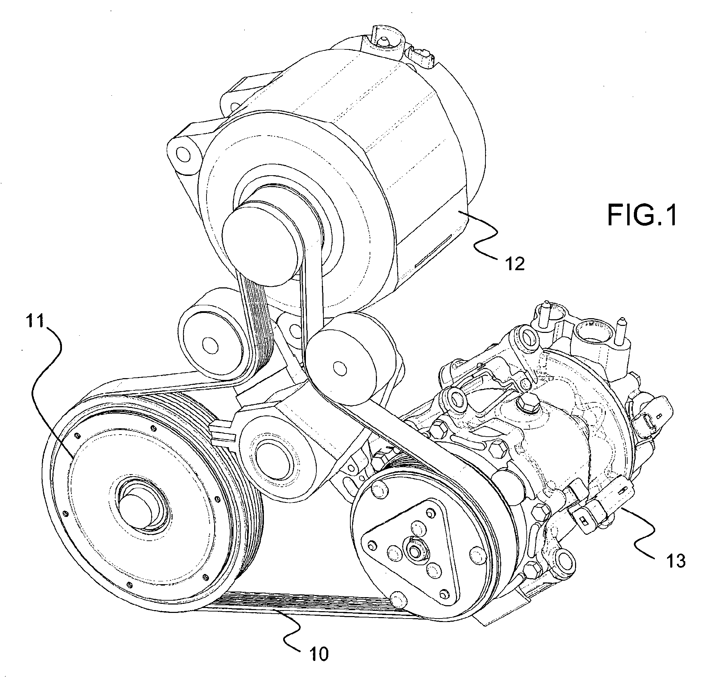

La figure 1 représente une courroie d'accessoire 10 d'un véhicule automobile et plusieurs éléments reliés par la courroie 10. Le véhicule automobile comprend un moteur thermique et une poulie 11 disposée en bout de vilebrequin du moteur thermique. Parmi les éléments entrainés par la courroie 10, un alternateur réversible 12 et un groupe de climatisation 13 sont représentés sur la figure 1. Il est bien entendu que d'autres accessoires peuvent être entrainés par la courroie 10.

De façon classique, l'alternateur réversible 12 peut être utilisé comme démarreur pour lancer le moteur thermique ou comme alternateur pour alimenter un réseau électrique du véhicule. Pour ces deux utilisations, l'alternateur réversible 12 et le moteur thermique sont accouplés en permanence. A cet effet, la poulie 11 est simplement solidaire du vilebrequin.

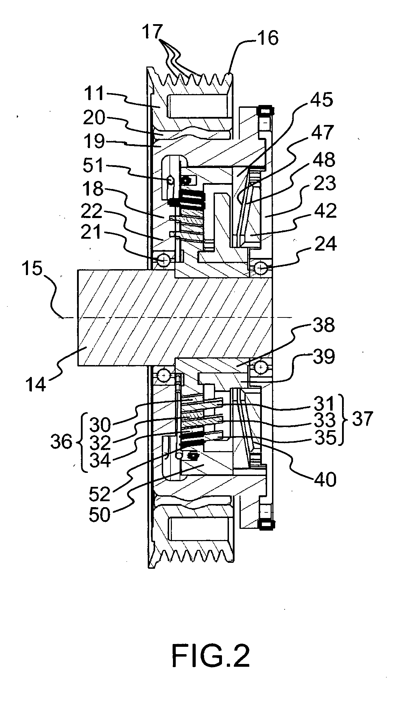

L'invention permet une autre utilisation de l'alternateur réversible 12 pour transmettre une puissance mécanique par la courroie 10 même lorsque le moteur thermique est à l'arrêt. A cet effet, la poulie 11 est débrayable. La figure 2 représente en coupe un dispositif d'accouplement de la poulie 11 et permet de visualiser des moyens autonomes et débrayables d'entrainement du vilebrequin par la courroie 10. Une extrémité libre du vilebrequin forme un arbre 14 mobile en rotation autour d'un axe 15. La poulie 11 peut soit tourner librement par rapport à l'arbre 14 soit être solidaire de celui-ci. L'invention prévoit des moyens débrayables d'entrainement de l'arbre 14 par la poulie 11. Ces moyens sont autonomes. La liaison en rotation entre la poulie 11 et l'arbre 14 est obtenue pour une vitesse de rotation de la poulie 11 autour de l'axe 15 supérieure à une vitesse donnée. En dessous de cette vitesse, la poulie 11 est libre en rotation par rapport à l'arbre 14. On peut alimenter l'alternateur réversible 12 pour qu'il entraine la poulie 11 par l'intermédiaire de la courroie 10 à une vitesse supérieure à la vitesse donnée et obtenir ainsi le démarrage du moteur thermique. On peut aussi alimenter l'alternateur réversible 12 de telle sorte que la vitesse de rotation de la poulie 11 soit inférieure à la vitesse donnée pour conserver la poulie 11 libre en rotation par rapport l'arbre 14 et ne pas démarrer le moteur thermique. Aucune action extérieure n'est nécessaire pour obtenir l'accouplement ou le désaccouplement de l'arbre 14 et de la poulie 11. La seule rotation de la poulie 11 permet l'accouplement ou le désaccouplement. La vitesse de rotation donnée est par exemple de 1500 tours par minute (soit 157 radians par seconde en unité du système international). En dessous de cette vitesse, le moteur thermique n'est pas accouplé à la poulie 11. En revanche, au dessus de cette vitesse, le vilebrequin et la poulie sont solidaires.

La poulie 11 comprend une surface de révolution 16 destinée à recevoir la courroie 10. Pour augmenter l'énergie mécanique transmissible entre la courroie 10 et la poulie 11, la courroie 10 est avantageusement striée et la surface de révolution 16 comprend plusieurs gorges 17 conformées pour recevoir les stries de la courroie 10. La poulie 11 comprend une jante 18 dont une partie périphérique extérieure 19 est solidaire de la surface 16. On peut disposer entre la partie périphérique extérieure 19 et la surface 16 une cale élastique 20 permettant de filtrer d'éventuels asynchronisme dans la rotation de la poulie 11 ou dans la rotation de l'arbre 14. Un roulement 21 relie une partie centrale 22 de la jante 18 et l'arbre 14. La jante 18 forme une première face latérale de la poulie 11. Une seconde face latérale de la poulie 11 peut être formée par une plaque de fermeture 23 solidaire de la partie périphérique extérieure 19. Un second roulement 24 relie la plaque de fermeture 23 et l'arbre 14. Les deux roulements 21 et 24 forment un palier permettant la rotation de la poulie 11 par rapport l'arbre 14 autour de l'axe 15.

Les moyens autonomes et débrayables d'entrainement de l'arbre 14 par la poulie 11 sont logés dans un espace situé entre la jante 18 et la plaque de fermeture 23. Cet espace est limité radialement par la partie périphérique extérieure 19 de la jante 18. Les moyens autonomes et débrayables d'entrainement comprennent un embrayage permettant l'accouplement de l'arbre 14 par rapport à la poulie 11. L'embrayage est par exemple conique et comprend plusieurs cônes de friction 30 à 35 répartis en deux ensembles alternés. Un premier ensemble 36 comprenant les cônes 30, 32 et 34 est lié en rotation de la jante 18 et un second ensemble 37 comprenant les cônes 31, 33 et 35 est lié en rotation à l'arbre 14 par l'intermédiaire d'un moyeu 38 et d'un croisillon 39, tous deux solidaires de l'arbre 14. Le croisillon 39 permet la liaison en rotation de l'ensemble 37 par rapport à l'arbre 14 autour de l'axe 13, tout en laissant subsister un degré de liberté en translation suivant l'axe 13. Ce degré de liberté en translation permet aux deux ensembles 36 et 37 de venir en pression l'un contre l'autre afin d'assurer une transmission de puissance entre l'arbre 14 et la poulie 11. Afin d'assurer un coefficient de frottement élevé entre les deux ensembles 36 et 37, les cônes 30 à 35 peuvent être réalisés ou revêtus de carbone.

Les moyens autonomes et débrayables d'entrainement comprennent au moins une masse inertielle pouvant se déplacer radialement par rapport à l'axe 15 lors de la rotation de la poulie 11. Dans l'exemple représenté, quatre masses inertielles 40 à 43 sont présentes et deux sont visibles sur la figure 2. Les masses 40 à 43 sont réparties radialement autour de l'axe 13. Les masses inertielles 40 à 43 sont entrainées en rotation par la poulie 11 par l'intermédiaire de la plaque de fermeture 23 autour de l'axe 15. Lors de la rotation de la poulie 11, les masses 40 à 43 se déplacent en translation radialement par rapport à l'axe 15 jusqu'à venir au contact d'un plateau 45 de révolution autour de l'axe 15. Les masses 40 à 43 sont toutes identiques afin de se déplacer simultanément sous l'effet de la rotation de la poulie 11. Le plateau 45 est libre translation suivant l'axe 15 Le plateau est guidé dans son mouvement par la partie périphérique extérieure 19 de la jante 18. Le plateau 45 comprend une surface conique 46 sur laquelle prend appui une autre surface conique 48 appartenant à chacune des masses inertielles 40 à 43. Cet appui entre les deux surfaces coniques 47 et 48 permet de transformer l'effort radial que les masses exercent lors de leur mouvement en effort axial permettant l'accouplement de l'arbre 14 et de la poulie 11.

Le plateau conique 45 prend appui sur un baladeur 50 de révolution libre en translation par rapport à la jante 18. Le dispositif comprend un ressort de rappel 51 s'opposant à l'effort axial d'accouplement. Le ressort 51 prend appui sur la jante 18 d'une part et sur le baladeur 50 d'autre part. Le tarage du ressort 51 permet de régler la vitesse de rotation donnée de la poulie 11 au-delà de laquelle l'accouplement s'effectue. Autrement dit, le ressort de rappel 51 maintient l'embrayage désaccouplé lorsque la vitesse de rotation de la poulie 11 est inférieure à la vitesse de rotation donnée.

Le baladeur comprend une surface conique 52 destinée à prendre appui contre le cône de friction 35. Lorsque l'effort exercé par les masses inertielles 40 à 43 sur le plateau conique 45 est suffisant pour comprimer le ressort 51 les cônes de friction 30 à 35 viennent en pression les uns contre les autres de façon à accoupler la poulie 11 et l'arbre 14.

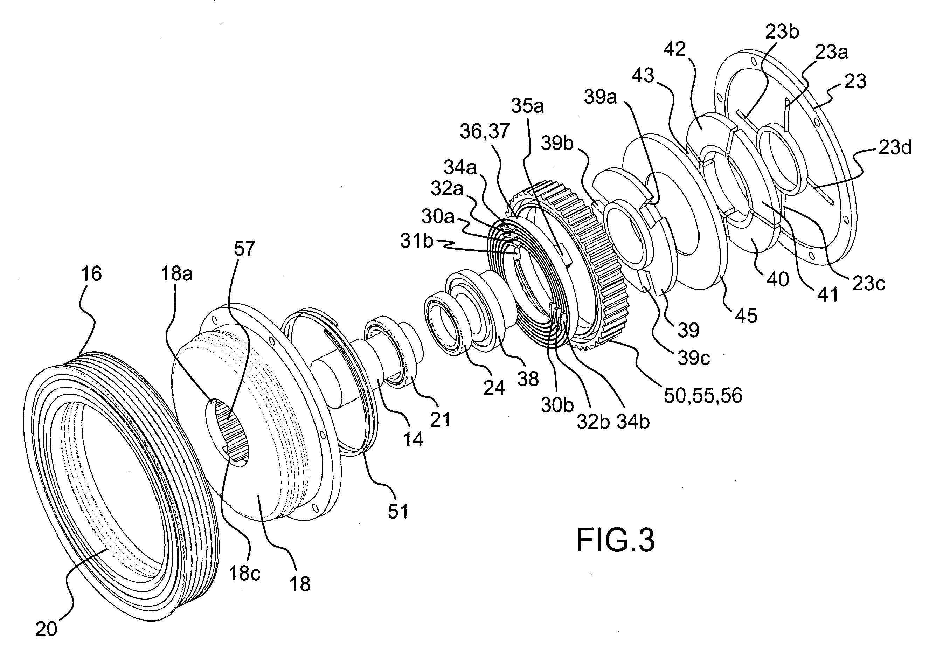

La figure 3 représente en perspective et en vue éclatée, le dispositif d'accouplement débrayable. Sur cette figure, on distingue plus particulièrement le guidage axial du baladeur 50 réalisé au moyen de cannelures 55 disposées sur une surface cylindrique extérieure 56 du baladeur et de cannelures 57 correspondantes sur une surface cylindrique intérieure de la jante 18. A titre d'alternative, d'autres moyens de guidage sont possible comme par exemple un système utilisant une clavète fixée au baladeur 50 et pouvant coulisser dans une rainure réalisée dans la jante 18. On distingue également l'entrainement en rotation des cônes 30, 32 et 34 par la jante 18. Chacun des cônes 30, 32 et 34 dispose de plusieurs doigts, 30a, 30b et 30c pour le cône 30, 32a, 32b et 32c pour le cône 32 et 34a, 34b et 34c pour le cône 34. Ces doigts coopèrent avec des rainures 18a 18b et 18c correspondantes réalisées dans la jante 18. De même, des doigts sont réalisés dans les cônes 31, 33 et 35. Ces doigts coopèrent avec des rainures 39a, 39b et 39c du croisillon 39 pour assurer l'entrainement en rotation des cônes 31, 33 et 35. Sur la figure 3, tous les doigts ne sont pas visibles. Pour un même cône, ils sont régulièrement répartis autour de l'axe 13. Il est de même pour les rainures. Les masses 40 à 43 sont entrainées en rotation par la plaque de fermeture 23 au moyen de butées radiales 23a, 23b, 23c et 23d réalisées de façon proéminente dans la plaque de fermeture 23. Chacune des masses inertielles 40 à 43 est guidée dans son déplacement radial entre deux de ces butées radiales. Par exemple la masse 41 peut se déplacer radialement le long de la plaque de fermeture 23 en restant cantonnée entre les butées radiales 23a et 23d.

## Revendications

1. Dispositif d'accouplement entre un arbre (14) et une poulie (11) pouvant tourner l'un par rapport à l'autre autour d'un axe (15), la poulie (11) étant située autour de l'arbre (14), le dispositif comprenant des moyens débrayables autonomes (36, 37, 40, 41, 42, 43, 45, 50) d'entrainement de l'arbre (14) par la poulie (11) permettant d'interdire l'entrainement de l'arbre (14) par la poulie (11) lorsque celle-ci tourne à une vitesse de rotation inférieure à une vitesse de rotation donnée et permettant l'entrainement de l'arbre (14) par la poulie (11) lorsque celle-ci tourne à une vitesse de rotation supérieure à la vitesse de rotation donnée, les moyens débrayables autonomes d'entrainement comprenant un embrayage (36, 37) permettant l'accouplement de l'arbre (14) par rapport à la poulie (11) sous l'effet d'un effort d'accouplement et au moins une masse inertielle (40, 41, 42, 43) pouvant se déplacer radialement par rapport à l'axe (15) lors de la rotation de la poulie (11), le déplacement de la masse inertielle (40, 41, 42, 43) générant l'effort d'accouplement, l'effort d'accouplement état axial, **caractérisé en ce que** l'effort d'accouplement est transmis de la masse inertielle (40, 41, 42, 43) vers l'embrayage (36, 37) au moyen d'un plateau conique (45) sur lequel la masse inertielle (40, 41, 42, 43) prend appui lors de son déplacement radial, sur une surface conique (48) appartenant à la dite masse inertielle.

2. Dispositif d'accouplement selon la revendication 1, **caractérisé en ce qu'**il comprend un ressort de rappel (51) s'opposant à l'effort d'accouplement et maintenant l'embrayage (36, 37) désaccouplé lorsque la vitesse de rotation de la poulie (11) est inférieure à la vitesse de rotation donnée.

3. Dispositif d'accouplement selon la revendication 1 ou la revendication 2, **caractérisé en ce que** l'embrayage (36, 37) est conique.

4. Dispositif d'accouplement selon la revendication 3, **caractérisé en ce que** l'embrayage (36, 37) comprend plusieurs cônes de friction (30 à 35) répartis en deux ensembles alternés (36, 37), un premier ensemble (36) étant lié en rotation à la poulie (11) et un second ensemble (37) étant lié en rotation à l'arbre (14).

5. Bloc moteur pouvant équiper un véhicule automobile et comprenant un moteur thermique, un alternateur réversible (12) permettant le démarrage du moteur thermique et la génération d'énergie électrique, un accessoire (13), le moteur thermique et l'alternateur réversible (12) pouvant entrainer l'accessoire (13) en rotation au moyen d'une courroie (10), **caractérisé en ce qu'**il comprend un dispositif d'accouplement selon l'une des revendications précédente entre un arbre (14) de sortie du moteur thermique et une poulie (11) entrainée par la courroie (10).

6. Bloc moteur selon la revendication 5, **caractérisé en ce que** l'accessoire est un groupe de climatisation (13).

## Patentansprüche

1. Vorrichtung zum Kuppeln zwischen einer Welle (14) und einer Laufrolle (11), die zueinander um eine Achse (15) drehen können, wobei die Laufrolle (11) um die Welle (14) liegt, wobei die Vorrichtung autonome, ausrückbare Mittel (36, 37, 40, 41, 42, 43, 45, 50) zum Antreiben der Welle (14) durch die Laufrolle (11) aufweist, die es erlauben, das Antreiben der Welle (14) durch die Laufrolle (11) zu untersagen, wenn diese mit einer Drehzahl dreht, die kleiner ist als eine gegebene Drehzahl, und die das Antreiben der Welle (14) durch die Laufrolle (11) erlauben, wenn diese mit einer Drehzahl dreht, die größer ist als die gegebene Drehzahl, wobei die ausrückbaren autonomen Antriebsmittel eine Kupplung (36, 37) aufweisen, die das Kuppeln der Welle (14) in Bezug auf die Laufrolle (11) unter der Einwirkung einer Kupplungskraft erlaubt, und mindestens eine Trägheitsmasse (40, 41, 42, 43), die sich radial in Bezug auf die Achse (15) bei der Drehung der Laufrolle (11) verlagern kann, wobei die Verlagerung der Trägheitsmasse (40, 41, 42, 43) die Kupplungskraft erzeugt, wobei die Kupplungskraft axial ist, **dadurch gekennzeichnet, dass** die Kupplungskraft von der Trägheitsmasse (40, 41, 42, 43) zu der Kupplung (36, 37) mittels einer konischen Platte (45), auf der die Trägheitsmasse (40, 41, 42, 43) bei ihrer radialen Verlagerung auf einer konischen Oberfläche (48), die zu der Trägheitsmasse gehört, aufliegt, übertragen wird.

2. Kupplungsvorrichtung nach Anspruch 1, **dadurch gekennzeichnet, dass** sie eine Rückstellfeder (51) aufweist, die sich der Kupplungskraft entgegensetzt und die Kupplung (36, 37) ausgerückt hält, wenn die Drehzahl der Laufrolle (11) kleiner ist als die gegebene Drehzahl.

3. Kupplungsvorrichtung nach Anspruch 1 oder Anspruch 2, **dadurch gekennzeichnet, dass** die Kupplung (36, 37) konisch ist.

4. Kupplungsvorrichtung nach Anspruch 3, **dadurch gekennzeichnet, dass** die Kupplung (36, 37) mehrere Reibungskegel (30 bis 35) aufweist, die in zwei abwechselnden Einheiten (36, 37) verteilt sind, wobei eine erste Einheit (36) in Drehung mit der Laufrolle (11) verbunden ist und eine zweite Einheit (37) in Drehung mit der Welle (14) verbunden ist.

5. Motorblock, der ein Kraftfahrzeug ausstatten kann und einen Verbrennungsmotor, eine umkehrbare Lichtmaschine (12), die das Anlassen des Verbrennungsmotors und das Erzeugen elektrischer Energie erlaubt, ein Zubehör (13) aufweist, wobei der Verbrennungsmotor und die umkehrbare Lichtmaschine (12) das Zubehör (13) in Drehung mittels eines Riemens (10) antreiben können, **dadurch gekennzeichnet, dass** er eine Kupplungsvorrichtung nach einem der vorhergehenden Ansprüche zwischen einer Ausgangswelle (14) des Verbrennungsmotors und einer Laufrolle (11), die von dem Riemen (10) angetrieben ist, aufweist.

6. Motorblock nach Anspruch 5, **dadurch gekennzeichnet, dass** der Zubehörteil eine Klimaanlage (13) ist.

## Claims

1. A coupling device between a shaft (14) and a pulley (11) which are able to turn relative to one another about an axis (15), the pulley (11) being situated about the shaft (14), the device including autonomous disengageable means (36, 37, 40, 41, 42, 43, 45, 50) for driving the shaft (14) by the pulley (11) permitting the driving of the shaft (14) by the pulley (11) to be prohibited when the latter rotates at a rotation speed that is less than a given rotation speed, and permitting the driving of the shaft (14) by the pulley (11) when the latter rotates at a rotation speed that is greater than the given rotation speed, the autonomous disengageable driving means including a clutch (36, 37) permitting the coupling of the shaft (14) with respect to the pulley (11) under the effect of a coupling force and at least one inertial mass (40, 41, 42, 43) being able to move radially with respect to the axis (15) during the rotation of the pulley (11), the displacement of the inertial mass (40, 41, 42, 43) generating the coupling force, the coupling force being axial, **characterized in that** the coupling force is transmitted from the inertial mass (40, 41, 42, 43) towards the clutch (36, 37) by means of a conical plate (45) on which the inertial mass (40, 41, 42, 43) rests during its radial displacement, on a conical surface (48) belonging to said inertial mass.

2. The coupling device according to Claim 1, **characterized in that** it includes a return spring (51) opposing the coupling force and keeping the clutch (36, 37) disengaged when the rotation speed of the pulley (11) is less than the given rotation speed.

3. The coupling device according to Claim 1 or Claim 2, **characterized in that** the clutch (36, 37) is conical.

4. The coupling device according to Claim 3, **characterized in that** the clutch (36, 37) includes several friction cones (30 to 35) distributed in two alternate assemblies (36, 37), a first assembly (36) being linked in rotation to the pulley (11) and a second assembly (37) being linked in rotation to the shaft (14).

5. An engine block being able to equip a motor vehicle and including a heat engine, a reversible alternator (12) permitting the starting of the heat engine and the generation of electrical energy, an accessory (13), the heat engine and the reversible alternator (12) being able to drive the accessory (13) in rotation by means of a belt (10), **characterized in that** it includes a coupling device according to one of the preceding claims between an output shaft (14) of the heat engine and a pulley (11) driven by the belt (10).

6. The engine block according to Claim 5, **characterized in that** the accessory is an air-conditioning unit.
